# EUROPEAN PATENT APPLICATION

(11) **EP 3 043 449 A2**
(43) Date of publication of application: **13.07.2016**
(21) Application number: 15190302.8
(22) Date of filing: 16.10.2015
(51) Int. Cl.: H02K 3/12, H02K 3/14

(54) **STATOR WINDING ASSEMBLY**

(30) Priority: 17.12.2014 US 201414573545
(71) Applicant: Hamilton Sundstrand Corporation, Charlotte, NC 28217 (US)
(72) Inventor: WAWRZYNIAK, Beata I., South Windsor, CT Connecticut 06074 (US); TANGUDU, Jagadeesh, South Windsor, CT Connecticut 06074 (US); JAGDALE, Vijay, Manchester, CT Connecticut 06042 (US); KUCZEK, Andrzej Ernest, Bristol, CT Connecticut 06010 (US); EL-WARDANY, Tahany Ibrahim, Bloomfield, CT Connecticut 06002 (US); SCHMIDT, Wayde R., Pomfret Center, CT Connecticut 06259 (US)
(74) Representative: Hull, James Edward

(57) **Abstract**

A stator (10) includes a stator core (12) and a winding assembly (18). The stator core (12) has an axis (A) and a slot (14) extending a radial depth (Dᵣ) from a slot opening (16). The winding assembly (18) is disposed in the slot (14), and includes a plurality of winding strands (22) with cross-sectional shapes that vary as a function of radial location within the slot (14). A method of forming a stator winding assembly (18) includes additively manufacturing a plurality of winding strands (22) and an insulating gap matrix (24) that separates the winding strands (22).

## Description

### BACKGROUND

The present invention relates generally to stator windings for generators and motors, and more particularly to a stator winding assembly with winding strands that vary in cross-sectional shape as a function of radial location within a stator slot. The stator winding assembly can be additively manufactured.

Electrical machines such as motors and generators commonly include wound stators with slotted ferromagnetic cores. Stator slots are filled with a plurality of conductive windings. Motors run current through stator windings to drive a rotor, while generator rotors (e.g. permanent magnet or wound electromagnet rotors) induce usable currents in stator windings to generate power. Electrical impedance of windings is a critical factor in determining overall machine efficiency. High resistive losses are undesirable, and generators are commonly constructed to minimize direct current (DC) components of electrical resistance (e.g. due to ohmic heating). Alternating current (AC) produces further resistive losses due to inductive reactance. AC component resistive losses are worsened by fringing flux near stator slot openings.

### SUMMARY

In one embodiment, the present invention is directed toward a stator including a stator core and a winding assembly. The stator core has an axis and a slot extending a radial depth from a slot opening. The winding assembly can be additively manufactured, is disposed in the slot, and includes a plurality of winding strands with cross-sectional shapes that vary as a function of radial location within the slot.

In another embodiment, the present invention is directed toward a method of forming a stator winding assembly for a stator slot. The method includes additively manufacturing a plurality of winding strands and an insulating gap matrix that separates the winding strands. The winding strands have cross-sectional shapes through a radial-circumferential plane that varies as a function of radial position within the slot.

### BRIEF DESCRIPTION OF THE DRAWINGS

FIG. 1 is a simplified cross-sectional view of a stator slot housing a winding assembly.
FIG. 2a is simplified perspective view of a first embodiment of the winding assembly with a plurality of twisted stator windings.
FIG. 2b is a cross-sectional view of a stator slot including the winding assembly of FIG. 2a.
FIGs. 2c and 2d are cross-sectional views of the winding assembly of FIGs. 2a and 2b through consecutive axial sections.
FIG. 3a is a cross-sectional view of a stator slot including a second embodiment of the winding assembly.
FIGs. 3b and 3c are cross-sectional views of the winding assembly of FIG. 3a through consecutive axial sections.
FIGs. 4a and 4b are cross-sectional views of variations on a stator slot including a third embodiment of the winding assembly.
FIGs. 4c and 4d are cross-sectional of the winding assembly of FIGs. 4a and 4b through consecutive axial sections.
FIGs. 5, 6, and 7 are cross-sectional views of embodiments of the winding assembly having strands with varying cross-sectional geometry.
FIG. 8 is a method flowchart illustrating a method of additively manufacturing the winding assemblies of FIGs. 1-7.

While the above-identified figures set forth one or more embodiments of the present disclosure, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features and components not specifically shown in the drawings.

### DETAILED DESCRIPTION

The present invention relates to a stator winding assembly wherein cross-sectional shape of stator winding strands varies as a function of radial position within a stator slot. This variation in cross-sectional shape allows the total effect of fringing flux on AC resistive losses to be minimized or reduced without substantially varying the total cross-sectional area of each winding strand.

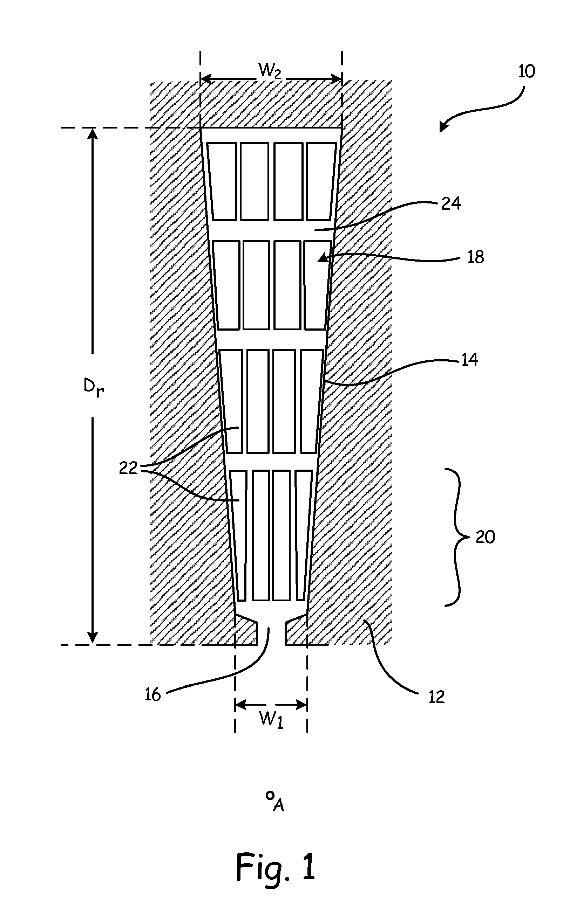

FIG. 1 is a simplified cross-sectional view of stator 10, which includes core 12 (with slot 14 and opening 16) and winding assembly 18 (with winding layers 20, winding strands 22, and gap matrix 24). Stator 10 is a stator section of an electrical machine such as a motor or generator. In the depicted embodiment, stator 10 is disposed about a central axis A.

Core 12 is a stationary ferromagnetic structure housing winding assembly 18 within slot 14. Although only a single slot 14 is shown in FIG. 1, stator 10 can have any number of slots 14 distributed circumferentially about axis A, each housing a winding assembly 18 substantially as illustrated and described herein. Opening 16 is a passage through core 12 into slot 14. In the depicted embodiment, opening 16 is situated at a radially innermost extent of slot 14, facing axis A. Although description hereinafter focuses on this arrangement with opening 16 facing radial inward, a person skilled in the art will understand that alternative motor and/or generator configurations (e.g. where rotor components are disposed coaxially outside of stator components) can use different stator slot geometries without departing from the scope of the present invention.

Winding assembly 18 can be a structure formed via additive manufacture. Winding assembly 18 can, for example, be fabricated by the deposition of layers of conductive and insulative material via electron beam melting (EBM) or laser deposition. In the depicted embodiment, winding assembly 18 has a substantially trapezoidal cross-section in the illustrated radial-circumferential plane matching the geometry of slot 14, with radial depth Dᵣ and circumferential width extending from first width W₁ near axis A to second width W₂ at the outermost radial extent of slot 14. In alternative embodiments, different shapes of slot 14 may necessitate differences in the shape of winding assembly 18.

Winding assembly 18 includes a plurality of radially stacked winding layers 20, each containing a plurality of winding strands 22. Winding strands 22 are formed of conductive material (e.g. copper), and are separated from adjacent winding strands 22 by gap matrix 24. Each winding strand forms a stator winding or part of a stator winding with a plurality of generator or motor "turns." Gap matrix 24 is an insulating structure formed of dielectric material that forms a narrow filled gap between winding strands 22. Winding strands 22 form turns of stator windings for a motor or generator of which stator 10 is a part. Although winding assembly 18 is illustrated for simplicity with only 16 winding strands, winding assembly 18 can in fact have any suitable number of strands, even many hundreds or thousands of winding strands.

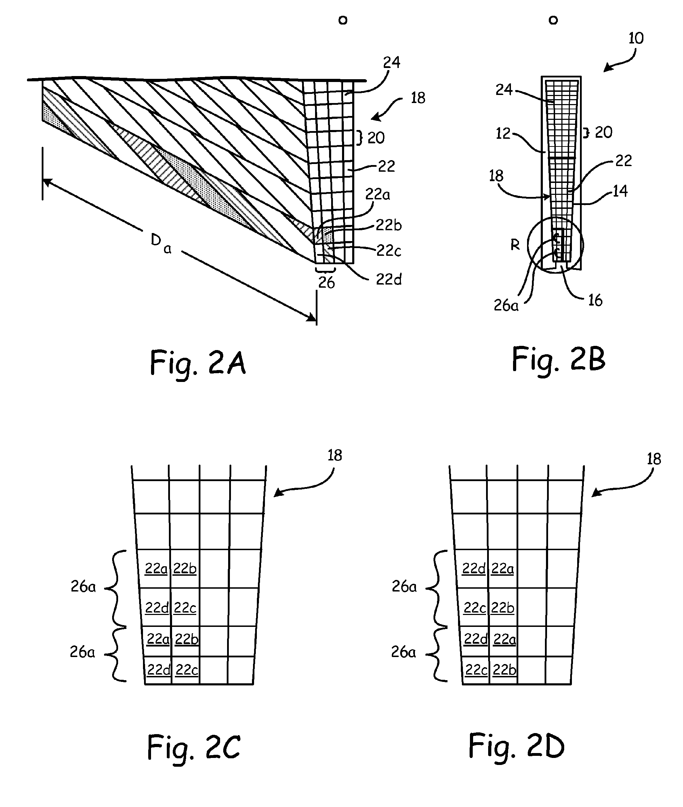

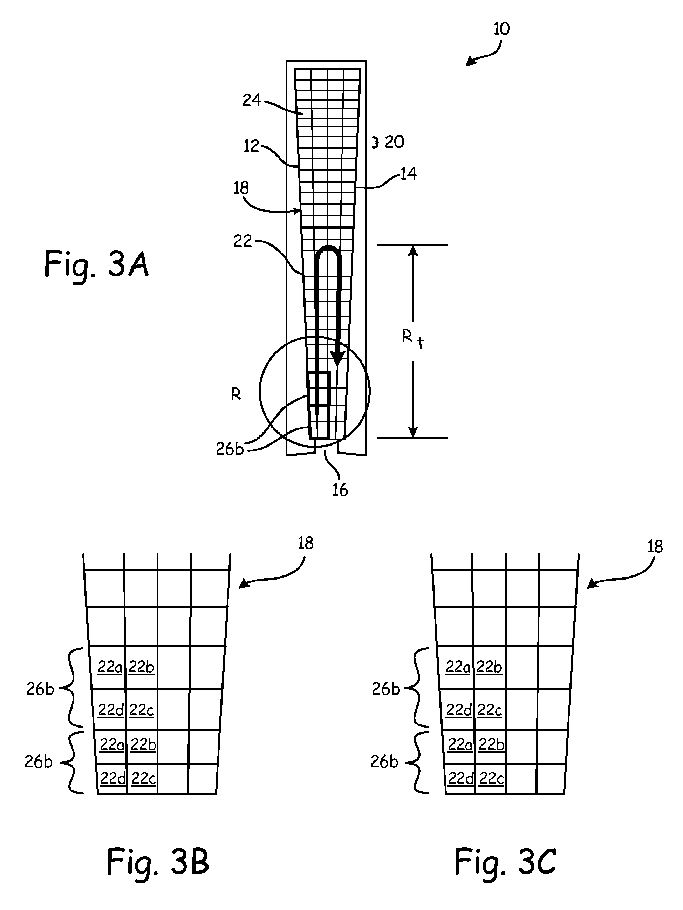

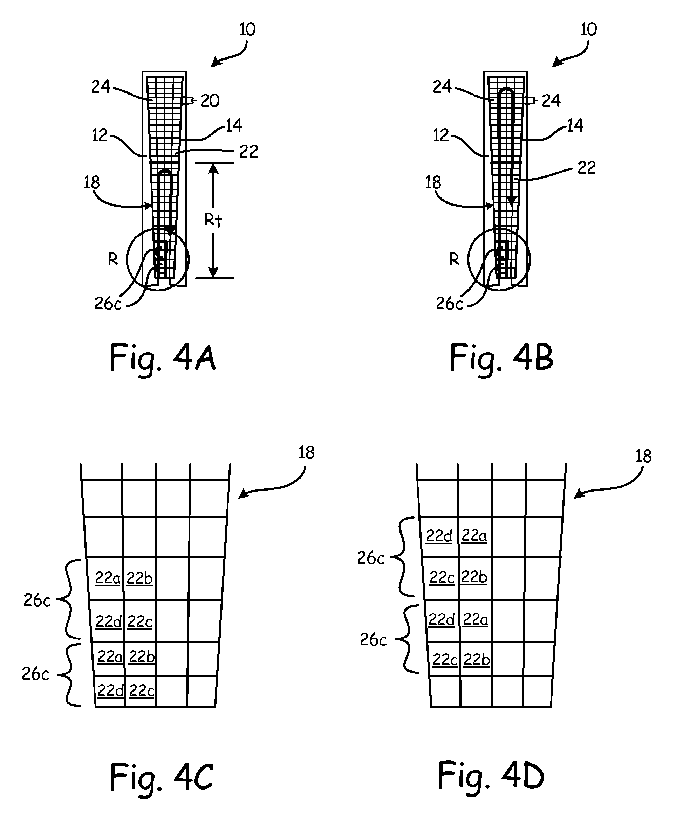

Winding strands 22 of different winding layers 20 can have different cross-sectional geometries. In the embodiment illustrated in FIG. 1, all winding strands 22 are substantially trapezoidal or rectangular in shape, but winding strands 22 of different winding layers 20 have different aspect ratios. In particular, winding layers closer to axis A are shown as circumferentially narrow and radially elongated compared to strands situated deeper in slot 14 (i.e. further from opening 16 and axis A), such that the total number of winding strands 22 in each winding layer 20 remains constant as the width of slot 14 expands from first width W₁ to second width W₂. In the illustrated embodiment, winding strands 22 circumferentially abutting core 12 are illustrated as trapezoidal in cross-section, whereas winding strands 22 situated in the interior of winding assembly 18 are substantially rectangular in cross-section. This variation in shape allows winding assembly 18 to fill slot 14 as completely as possible. In general, some embodiments can fill the majority of winding assembly 18 with winding strands 22 having a common base shape class (e.g. rectangular), with outer winding strands 22 varying in shape class (e.g. including arcuate or trapezoidal shapes) to conform to the shape of slot 14. Additional winding patterns are depicted and described in detail below with respect to FIGs. 3a-3d and 4a-4c. Winding strands 22 can vary in shape and dimensions, so long as the total cross-sectional area of all winding strands 22 is substantially constant. In some embodiments, winding strands can vary in both cross-sectional shape and radial-circumferential location as a function of axial position, as described hereinafter with respect to FIGs. 2a-2d, 3a-3c, and 4a-4d.

FIG. 2a is a simplified perspective view of a portion of one embodiment of winding assembly 18. FIG. 2a illustrates winding layers 20 of winding strands 22, separated by gap matrix 24, substantially as described above with respect to FIG. 1. FIG. 2a further illustrates bundle 26, a collection of twisted or transposed winding strands 22a, 22b, 22c, and 22d. Although winding strands 22a-d are particularly identified, all winding strands 22 can be subdivided into bundles 26. Although bundle 26 is illustrated as containing only four winding strands 22a-d, bundles can, in some embodiments, include three or fewer, or five or more, winding strands 22.

Bundle 26 is a collection of winding strands 22 that are deposited such that each strand is displaced radially and in some cases circumferentially through axial depth Dₐ of winding assembly 18, of the course of a full winding turn. In the illustrated embodiment, this displacement effects a "twisting" of bundle 26, such that the relative location of each winding strand 22a-22d within bundle 26 changes as a function of axial position. Although bundle 26 is illustrated as "twisted" more than once across the full axial depth Dₐ of winding assembly 18, windings 22 can generally be displaced through a range of radial and circumferential locations any number of times across a full winding turn, as a function of axial position within winding assembly 18. The winding arrangement of FIG. 2a is described in further detail below with respect to FIGs. 2b-2d, and alternative arrangements are described with respect to FIGs. 3a-3c and 4a-4d. In general, each bundle 26 includes a subset of all winding strands 22 within which all winding strands are displaced radially and/or circumferentially relative to one another, or relative to other bundles, across axial depth Dₐ. This transposition at least partially equalizes the average exposure of individual winding strands 22 within bundle 26 to fringing fluxes near opening 16 (see FIG. 1 and FIGs. 4a-c, discussed below), thereby avoiding substantial differences in AC-component resistive losses between strands.

FIGs 2b-2d, 3a-3c, and 4a-4d are cross-sectional views illustrating several winding configurations wherein winding strands 22 and/or bundles 26 are transposed radially and/or circumferentially as a function of axial position. FIGs. 2b, 3a, 4a, and 4b depict stator 10 with core 12, slot 14, opening 16, winding assembly 18, winding layers 20, winding strands 22, and gap matrix 24 substantially as described above with respect to FIG. 1. FIGs. 2c, 2d, 3b, 3c, 4c, and 4d are close-up cross-sectional views of winding assembly 18 within region R (illustrated in FIGs. 2b, 3a, 4a, and 4b), illustrating winding assembly 18 with bundles 26a, 26b, and 26c. Bundles 26a, 26b, and 26c each contain several winding strands 22 identified as winding strands 22a, 22b, 22c, and 22c as discussed above with respect to FIG. 2a. Bundles 26a, 26b, 26c represent several arrangements of winding strands 22 that at least partially equalize average strand exposure to fringing fluxes near opening 16 by displacing winding strands 22 radially and/or circumferentially as a function of axial position over the course of a one or more full turns.

FIG. 2b illustrates bundles 26a, which are transposed or "twisted" substantially as described above with respect to FIG. 2. FIG. 3a illustrates bundles 26b, which are each displaced with respect to adjacent bundles as a function of axial position. While the winding arrangement of bundles 26a only allows average fringing flux exposure to be equalized within each bundle 26a, the winding arrangement of bundles 26b allows average fringing flux exposure to be substantially equalized across a wide range of winding layers 20 determined by turn region Rₜ, a measure of the full radial extent of displacement of each bundle 26b. Across the full extent of axial depth Dₐ (see FIG. 2), winding strands 22 of each bundle 26b can be displaced across the full range of turn region Rₜ. FIGs.. 2c and 2d are simplified cross-sectional views of winding assembly 18 illustrating the "twisting" of bundles 26a, while FIGs. 3b and 3c are analogous cross-sectional views of winding assembly 18 illustrating the displacement of bundles 26b. As shown in FIGs. 2c and 2d, winding strands 22a, 22b, 22c, and 22d are shifted relative to one another within bundles 26a (e.g. by rotation), but are not displaced between axial locations. By contrast, winding strands 22a, 22b, 22c, and 22d retain their positions within bundles 26b, but are displaced as a group within winding assembly 18.

FIGs. 4a and 4b illustrate combinations of the winding arrangements of bundles 26c. Bundles 26c are simultaneously internally twisted as illustrated in FIG. 2a-2d, and radially displaced relative to other bundles 26c as described with respect to FIG. 3a-3c. This serves to equalize flux exposure locally within each bundle, and globally across multiple bundles. The winding arrangements of bundles 26c differ only in the axial range of each bundle. Bundles 26c of FIG. 4a traverse an axial range defined by turn region Rₜ, as described above with respect to FIG. 3a-3c. This turn region can, for example, correspond to a fractional part (e.g. 1/2 or 1/3) of winding assembly 18, by cross-sectional area. FIG. 4b illustrates an embodiment wherein the turn region of bundles 26c spans the full radial depth of slot 14. FIGs.. 4c and 4d are simplified cross-sectional views of winding assembly 18 illustrating the "twisting" and displacement of bundles 26c. Winding strands 22a, 22b, 22c, and 22d are simultaneously shifted relative to one another within bundles 26a (e.g. by rotation), and are displaced as a group within winding assembly 18.

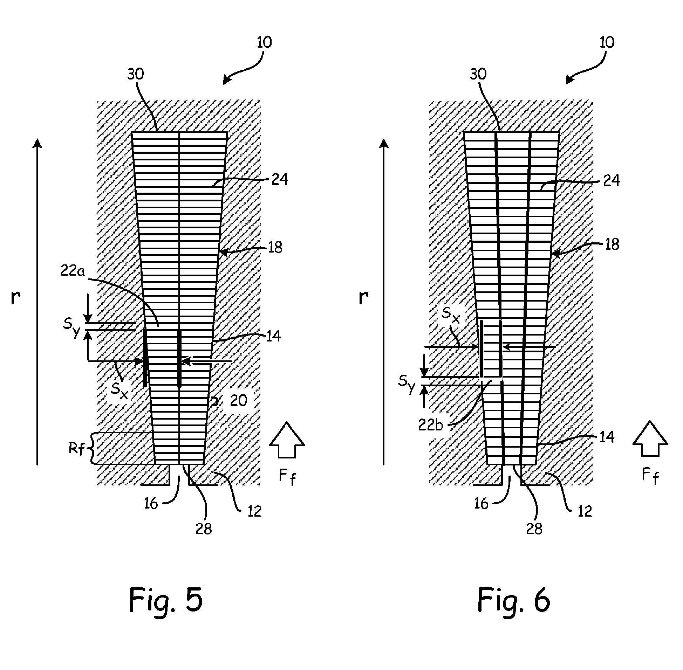

FIGs. 5, 6, and 7 are simplified cross-sectional views of embodiments of winding assembly 18 illustrating winding arrangements wherein different winding strands 22 have different cross-sectional geometries. FIGs. 5, 6, and 7 illustrate stator 10, core 12, slot 14, opening 16, winding assembly 18, winding layers 20, winding strands 22 (identified via reference numerals 22a and 22b, and 22c, respectively), and gap matrix 24 generally as described above with respect to FIG. 1. In addition, winding strands 22a, 22b, and 22c can make up bundles that twist and/or are radially displaced within slot 14 as described above with respect to any of the embodiments of FIGs. 2a-4d. FIGs. 5, 6, and 7 additionally identify front section 28 and rear section 30 of winding assembly 18. Front section 28 is a radially innermost side of winding assembly 18 abutting opening 16, while rear section 30 is a radially outermost side of winding assembly 18 opposite front section 28. As noted previously, the cross-sectional geometry of winding strands 22 varies as a function of radial position *r* within slot 14. In the depicted embodiments of FIG. 5, 6, and 7, each winding strand 22a, 22b, and 22c has a substantially rectangular or trapezoidal cross-section with circumferential strand width Sₓ, radial strand height S_{y}, and total cross-sectional area T_{A} ≅ Sₓ*S_{y} that is substantially constant across all winding strands 22a, 22b, or 22c.

FIGs. 5 and 6 depict embodiments of winding assembly 18 wherein each winding layer 20 includes two or three winding strands 22a or 22b, respectively. These numbers are used purely illustratively; in general, any number of strands per layer can be used. In some applications, each winding layer 20 can contain many more winding strands 22. FIGs. 5 and 6 illustrate winding arrangements wherein each winding layer 20a or 20b has the same number of strands (i.e. two for FIG. 5, three for FIG. 6). As a result, the strand width Sₓ of each winding strand 22 increases relative to strand height S_{y} as slot 14 widens near rear section 30 to maintain constant cross-sectional area T_{A}.

As illustrated in FIG. 5, the flattened rectangular shape of winding strands 22a near front section 28 minimizes the proportion of winding layers 20 situated within flux region R_{f}, a region near opening 16 that experiences substantial fringing flux F_{f}. Fringing flux contributes significantly to AC resistive losses of any winding passing through flux region R_{f}. Thus, the elongated rectangular shape of winding strands 22a reduces net AC resistive losses in winding assembly 18. The elongation of winding strands 22a as a function of radial position within slot 14 results in particularly flat, wide strands 22a in rear section 30. This "flattening" can result in undesirable eddy currents.

To avoid or reduce the eddy current effects caused by the "flattening" of strands at rear section 30, winding strands 22b of FIG. 6 are closer to square in shape at front section 28. By increasing the number of winding strands 22b per winding layer 20, the embodiment of FIG. 6 brings the ratio of strand width Sₓ to strand height S_{y} closer to one throughout winding assembly 18, reducing the fractional penetration of surface eddy currents in winding strands 22b. This change comes at the cost of exposing a greater proportion of winding layers 20 to substantial fringing flux F_{f}.

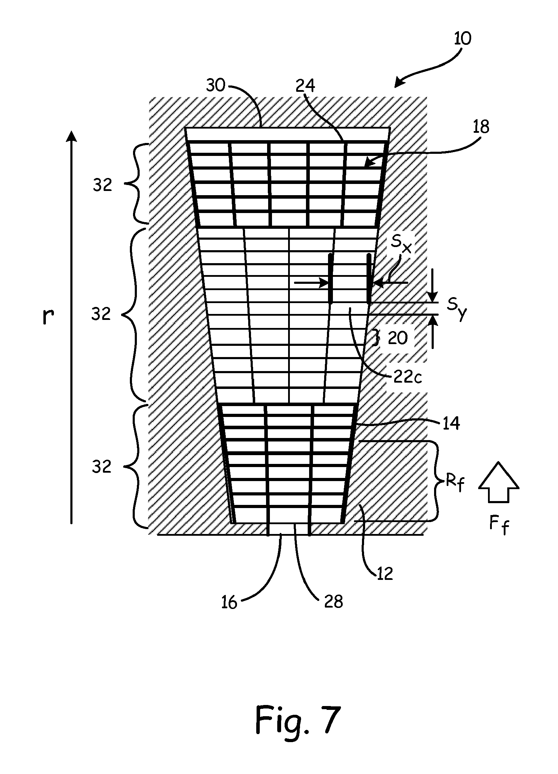

FIG. 7 illustrates an embodiment of winding assembly 18 with three distinct radial regions 32, each having a different number of winding strands 22c per winding layer 20. By varying the number of strands per layer, the winding arrangement of FIG. 7 is able to flatten winding strands 22c at front section 28 in flux region R_{f} to reduce the proportion of winding layers 20c exposed to significant fringing flux F_{f}, while avoiding extreme flattening at rear section 30 that would give rise to undesirable eddy current effects. Additive manufacturing allows winding assembly 18 to be subdivided into as many radial regions 32 as necessary to simultaneously minimize the impact of fringing flux and eddy currents on AC resistive losses within winding assembly 18.

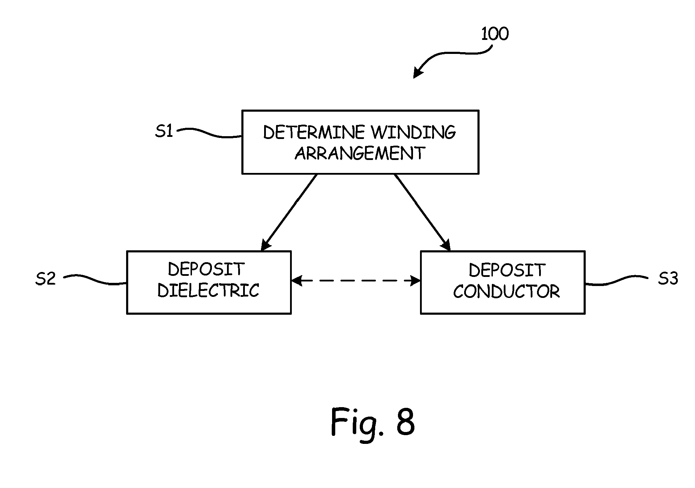

FIG. 8 is a flowchart illustrating method 100. Method 100 is a method for additively manufacturing winding assembly 18. In some embodiments, winding assembly 18 can be fabricated *in situ* within slot 14 of stator core 12, either after the formation of stator core 12 or as a sub-process in a single additive manufacturing process for stator 10 to produce both core 12 and winding assembly 18. First, a winding arrangement is determined, e.g. by selecting winding strand geometries as described above with respect to FIGs. 5-7 and bundle displacement patterns as described above with respect to FIGs. 2a-4d. (Step S1). Next, dielectric material (e.g. alumina) is deposited to form gap matrix 24 (Step S2), and conductor material (e.g. copper) is deposited to form winding strands 22 (Step S3). In some embodiments, conductor and dielectric material can both be deposited as a part of a single additive manufacturing process. In other embodiments, the deposition of conductor and dielectric material may involve several successive (e.g. alternating) process steps.

Winding assembly 18 includes a plurality of winding strands 22 that vary in shape as a function of radial position within slot 14. This variation reduces aggregate AC resistive losses due to fringing flux and eddy currents within winding assembly 18.

### Discussion of Possible Embodiments

The following are non-exclusive descriptions of possible embodiments of the present invention.

A stator comprising: a stator having an slot extending a slot depth from a slot opening; and a winding assembly disposed in the slot, the winding assembly comprising a plurality of winding strands with cross-sectional shapes that vary as a function of depth within the slot.

The stator of the preceding paragraph can optionally include, additionally and/or alternatively, any one or more of the following features, configurations and/or additional components:
A further embodiment of the foregoing stator, wherein the stator has an axis, and the slot depth is a radial depth from the slot opening.
A further embodiment of the foregoing stator, wherein the winding strands have substantially the same cross-sectional area, despite varying in cross-sectional shape.
A further embodiment of the foregoing stator, wherein each winding strand has a substantially rectangular or trapezoidal cross-section though a plane normal to the axis.
A further embodiment of the foregoing stator, wherein a radial depth of each winding strand decreases as a function of radial distance from the slot.
A further embodiment of the foregoing stator, wherein the plurality of winding strands are arranged in a plurality of radial sections, each radial section having a different number of winding strands per radial layer.
A further embodiment of the foregoing stator, wherein a radial depth of each layer decreases as a function of radial distance from the slot, within each radial section.
A further embodiment of the foregoing stator, wherein each winding strand is displaced across a range of radial locations over the course of one or more full turns.
A further embodiment of the foregoing stator, wherein the winding strands form twisted bundles.

A method of forming a stator winding assembly for a stator slot, the method comprising: additively manufacturing a plurality of winding strands with cross-sectional shape that varies as a function of depth within the slot; and additively manufacturing an insulating gap matrix that separates separating the winding strands.

The method of the preceding paragraph can optionally include, additionally and/or alternatively, any one or more of the following features, configurations and/or additional components:
A further embodiment of the foregoing method, wherein the cross-sectional shape is through a radial-circumferential cross-sectional plane, and the depth is a radial depth.
A further embodiment of the foregoing method, wherein additively manufacturing the plurality of winding strands comprises forming the winding strands in radial layers with radial height that varies as a function of radial location within the slot.
A further embodiment of the foregoing method, wherein additively manufacturing the plurality of winding strands comprises forming a plurality of radial sections, each radial section containing a subset of the radial layers such that each radial layer within each radial section has a constant number of winding strands.
A further embodiment of the foregoing method, wherein additively manufacturing the plurality of winding strands comprises forming winding strands of substantially rectangular or trapezoidal cross-section through the radial-circumferential plane.
A further embodiment of the foregoing method, wherein additively manufacturing the plurality of winding strands comprises forming winding strands that are displaced across a range of radial locations, as a function of axial position.
A further embodiment of the foregoing method, wherein additively manufacturing the plurality of winding strands comprises forming winding strands that are displaced across a full radial depth of the winding assembly, as a function of axial position.
A further embodiment of the foregoing method, wherein additively manufacturing the plurality of winding strands comprises forming winding strands that are displaced across a subset of the full radial depth of the winding assembly, as a function of axial position.

### Summation

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, alignment or shape variations induced by thermal, rotational or vibrational operational conditions, and the like.

While the invention has been described with reference to an exemplary embodiment(s), it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. A stator assembly comprising:
a stator (10) having an slot (14) extending a slot depth (Dᵣ) from a slot opening (16); and
a winding assembly (18) disposed in the slot (14), the winding assembly (18) comprising a plurality of winding strands (22) with cross-sectional shapes that vary as a function of depth within the slot (14).

2. The stator assembly of claim 1, wherein the stator (10) has an axis (A), and the slot depth (Dᵣ) is a radial depth from the slot opening (16).

3. The stator assembly of claim 1 or 2, wherein the winding strands (22) have substantially the same cross-sectional area, despite varying in cross-sectional shape.

4. The stator assembly of any of claims 1 to 3, wherein each winding strand (22) has a substantially rectangular or trapezoidal cross-section though a plane normal to the axis (A).

5. The stator assembly of claim 4, wherein a radial depth (Dᵣ) of each winding strand (22) decreases as a function of radial distance from the slot (14).

6. The stator assembly of any preceding claim, wherein the plurality of winding strands (22) are arranged in a plurality of radial sections, each radial section (32) having a different number of winding strands (22) per radial layer (20).

7. The stator assembly of any preceding claim, wherein each winding strand (22) is displaced across a range of radial locations over the course of one or more full turns.

8. The stator assembly of any preceding claim, wherein the winding strands (22) form twisted bundles (26).

9. A method of forming a stator winding assembly (18) for a stator slot (14), the method comprising:
additively manufacturing a plurality of winding strands (22) with cross-sectional shape that varies as a function of depth within the slot (14); and
additively manufacturing an insulating gap matrix (24) that separates separating the winding strands (22).

10. The method of claim 9, wherein the cross-sectional shape is through a radial-circumferential cross-sectional plane, and the depth (Dᵣ) is a radial depth.

11. The winding assembly (18) of claim 9 or 10, wherein additively manufacturing the plurality of winding strands (22) comprises forming the winding strands in radial layers (20) with radial height that varies as a function of radial location within the slot (14).

12. The winding assembly (18) of claim 11, wherein additively manufacturing the plurality of winding strands (22) comprises forming a plurality of radial sections (32), each radial section (32) containing a subset of the radial layers (20) such that each radial layer (20) within each radial section (32) has a constant number of winding strands (22).

13. The winding assembly (18) of any of claims 9 to 12, wherein additively manufacturing the plurality of winding strands (22) comprises forming winding strands (22) of substantially rectangular or trapezoidal cross-section through the radial-circumferential plane.

14. The winding assembly (18) of any of claims 9 to 13, wherein additively manufacturing the plurality of winding strands (22) comprises forming winding strands (22) that are displaced across a range of radial locations, as a function of axial position.

15. The winding assembly (18) of any of claims 9 to 14, wherein additively manufacturing the plurality of winding strands (22) comprises forming winding strands (22) that are displaced across a subset of the full radial depth of the winding assembly (18), as a function of axial position.
